Europäisches Patentamt

European Patent Office

Office européen des brevets

(11) Publication number : **0 466 241 A1**

## (12) EUROPEAN PATENT APPLICATION

(21) Application number : **91201659.9**

(22) Date of filing : **27.06.91**

(51) Int. Cl.⁵ : **C09J 5/10, B32B 15/08**

(30) Priority : **27.06.90 NL 9001475**
**05.11.90 NL 9002406**

(43) Date of publication of application :
**15.01.92 Bulletin 92/03**

(84) Designated Contracting States :
**BE DE ES FR GB IT NL**

(71) Applicant : **Ferro Techniek B.V.**
**Bremstraat 1**
**NL-7011 AT Gaanderen (NL)**

(72) Inventor : **Van Duyvenbode, Vincent**
**Muyspad 3**
**NL-6815 EX Arnhem (NL)**
Inventor : **Van Dijk, Antonius Wilhelmus**
**Cornelus Maria**
**Beethovenstraat 39**
**NL-7131 AK Lichtenvoorde (NL)**

(74) Representative : **Prins, Hendrik Willem et al**
**Octrooibureau Arnold & Siedsma**
**Sweelinckplein, 1**
**NL-2517 GK The Hague (NL)**

(54) **Method for joining articles enamelled and the structure obtained.**

(57)     The invention relates to a method for joining metal articles, each of which is provided on at least one side with an enamel coating, comprising the steps of :
   i) applying a thermoplastic plastic layer to at least one of the enamel coatings ;
   ii) making contact between the enamel coatings while enclosing the thermoplastic plastic layer ; and
   iii) joining the thermoplastic plastic layer to the enamel coatings,
and to the structure obtained therewith.

EP 0 466 241 A1

Jouve, 18, rue Saint-Denis, 75001 PARIS

FIG.1

The present invention relates to a method for joining metal articles which are provided on one or two sides with an enamel coating and to a structure of mutually joined enamelled, metal articles, wherein the enamel coatings are enclosed.

Many metal, preferably sheet metal, articles are subjected to a surface coating with enamel, which has a good chemical resistance and is fairly insensitive to thermal (shock) loads. Enamel is moreover moisture impermeable and displays no underrusting. Enamel provides in particular a very good corrosion resistance, also at high temperatures.

A drawback to enamelled articles is that after enamelling they cannot be subjected to any significant deformation. This means that shaped or hollow products, such as recuperative heat exchangers, have to be assembled from metal product components which normally are mutually connected by welding. When however use is made of conventional welding techniques such as TIG-welding, TIG/MIG-welding, MAG-welding, plasma welding, welding with an acetylene flame, electrode welding and the like, there always occurs a degradation of the enamel coating such that after the welding process the weld seam and adjoining portions of the metal article are no longer or insufficiently covered by the enamel coating and the protection against corrosion is therefore reduced or even absent.

The invention has for its object to provide a method with which enamelled metal articles are joined while enclosing the enamel coatings such that a reduction in the corrosion resistance at the location of the join between the enamelled metal articles substantially does not occur. In other words: when the enamelled metal articles are joined, the enclosed enamel coatings at the point of the join are substantially unaffected.

This is achieved according to the invention with a method for connecting metal articles, each of which is provided on at least one side with an enamel coating, comprising the steps of:

i) applying a thermoplastic plastic layer to at least one of the enamel coatings;

ii) making contact between the enamel coatings while enclosing the thermoplastic plastic layer; and

iii) joining the thermoplastic plastic layer to the enamel coatings.

The invention is based on an extensive study, from which emerged that a thermoplastic plastic layer can mutually connect enamel coatings when, for the joining, the thermoplastic plastic layer is temporarily heated to above its softening temperature. This softening temperature lies below the minimum temperature at which an enamel coating can be thermally affected. It was found that the thermoplastic plastic layer forms a reliable join between enamel coatings and has a great adhesive force.

In preference the thermoplastic plastic layer is only applied to the enamel coating portions for joining.

The adhesive strength between on the one hand the enamel coating and on the other the thermoplastic plastic layer has to be increased, and this is done by arranging an adhesive layer between the enamel coating and the thermoplastic plastic layer. An adhesive layer comprises a material whereby the surface roughness is increased. The adhesive layer can consist for instance of a so-called matt enamel, for instance 3650520 from Ferro Techniek.

Instead of using an adhesive layer with a greater surface roughness it is also possible to make the surface of the enamel coating rougher by blasting with solid particles such as sand and beads.

An optimum relation between the roughened enamel coating or the enamel coating provided with an adhesive layer on the one hand and the thermoplastic plastic layer on the other is obtained by applying a primer to the rough enamel surface or to the adhesive layer. As primer can for instance be used a dispersion of a fluorinated plastic such as PTFE (polytetrafluoroethene) in an organic solvent. A mechanical bonding is obtained by muffling at circa 200-300°C. Anchoring is obtained by then sintering at 330-450°C.

Although the thermoplastic plastic layer can be applied as a single layer to the enamel coating, it can be advantageous in particular conditions to apply a plurality of thermoplastic plastic layers which can even have mutually differing composition.

According to a first embodiment a thermoplastic plastic layer can be applied in the form of a foil, according to another embodiment the thermoplastic plastic layer can be applied by means of powder spraying followed by film-forming at higher temperature. The foil thickness and also the thickness of a plastic layer lie generally between 50-500 µm, preferably between 75-450 µm and more preferably between 100-400 µm.

For practical application of the method according to the invention it is usually recommended to provide each metal article in advance with the thermoplastic plastic layer on its enamel coating at the location of the join for forming, optionally by interposing an adhesive layer.

The thermoplastic plastics which can be used to form the join between the enamel coatings are generally those thermoplastic plastics which are heat-resistant in the temperature range of 100-300°C, preferably 120-280°C. Understood by heat resistance in this context is that within the stated temperature range the thermoplastic plastics undergo substantially no degeneration.

Suitable thermoplastic plastics comprise polyfluoroethenepropene (FEP), polyperfluoroalkoxyvinylfluoride (PFA), polyethylenetetrafluoroethene (ETFE), polyvinylidenefluoride (PVDF), polychlorotrif-

luoroethene (PCTFE), polyethylenechlorotrif-luoroethene (ECTFE), polyaryletherketone (PAEK), polyetheretherketone (PEEK), polyethersulphone (PES) and polysulphone (PSU).

In addition fluorine-containing elastomers can be used such as Viton[R] which is applied by means of vulcanizing.

If a gap which can be present between the metal articles provided with enamel coatings is relatively large (0.5-10 mm) it is recommended to apply a heat-resistant layer of filler between the enamel coatings for joining, optionally to the adhesive layer and/or the thermoplastic plastic layer. Such a filler is non-thermoplastic at the temperature wherein the structure of enamelled, joined metal articles is used. Suitable fillers comprise polytetrafluoroethene (PTFE), rubber elastomers and fluorine-containing elastomers, optionally with glass fibres and/or glass beads incorporated therein.

The invention finally relates to a structure consisting of at least two metal articles which are provided on at least one side with an enamel coating and which are mutually connected via the enamel coatings by interposing a thermoplastic plastic according to the method substantially as described above. Such a structure according to the invention can be applied particularly in a recuperative or regenerative heat exchanger.

Mentioned and other features of the method and the structure according to the invention will be further elucidated hereinafter in the light of a number of non-limitative embodiments given by way of example, wherein reference is made to the annexed drawings.

In the drawing:
figure 1 shows a perspective view of a set of structures of metal plates enamelled on one side and joined according to the invention;
figure 2 shows detail II of figure 1 on a larger scale;
figure 3 shows a section along the line II-II at the point of a join of a structure according to the invention;
figure 4 is a perspective, partly broken away view into a recuperative heat exchanger constructed from shaped metal plates enamelled on two sides and mutually joined according to the invention; and
figure 5 is a view corresponding with figure 1 of another embodiment of a heat exchanger according to the invention.

The metal that is enamelled can in principle be any conventional metal for enamelling, such as steel.

An enamel that can be used for one-sided or two-sided enamelling of sheet metal articles which are mutually joined according to the invention is a vitreous mass created by melting or so-called fritting of inorganic, substantially oxides-comprising composition which can be applied and fused in one or more layers onto metal or glass articles. Usual additives for enamel are silicon oxide, boron oxide and phosphorous oxide which are so-called network forming agents. Alkali metals and alkaline earth metals can further be added in addition to oxides of cobalt, nickel, copper and antimony. Diverse enamel types and their composition are well known to persons skilled in the art. Reference is made to enamel literature for further information.

A very specific type of enamel is cermet enamel. This enamel contains finely distributed metal particles, for instance aluminium particles. For more information regarding cermet enamel reference is made to "Mitteilungen des Vereins deutscher Emailfachleute E.V." part 27, page 49-60 (1979) and part 28, page 13-24 (1980).

Understood in principle by the term "enamel" are all those materials described in the NEN-norm 2711.

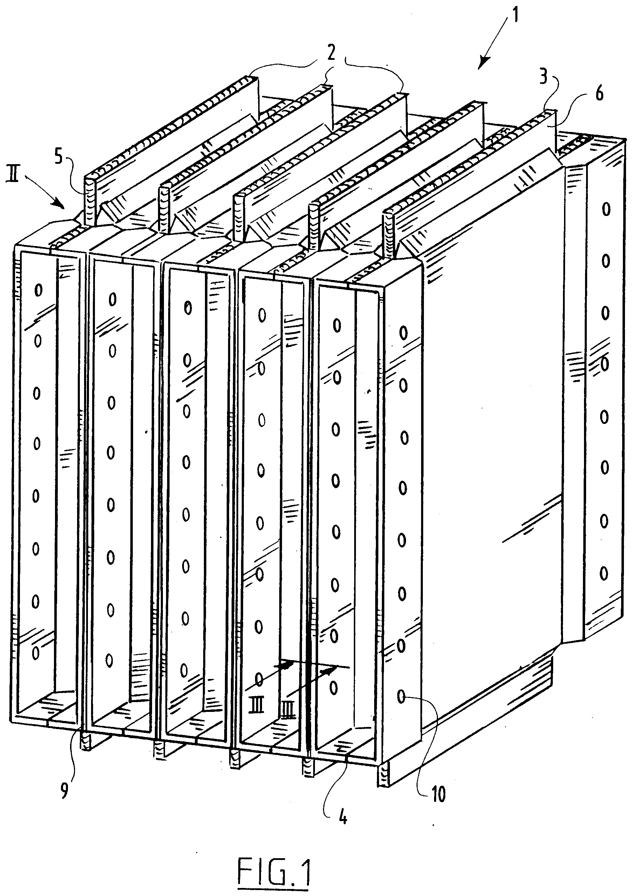

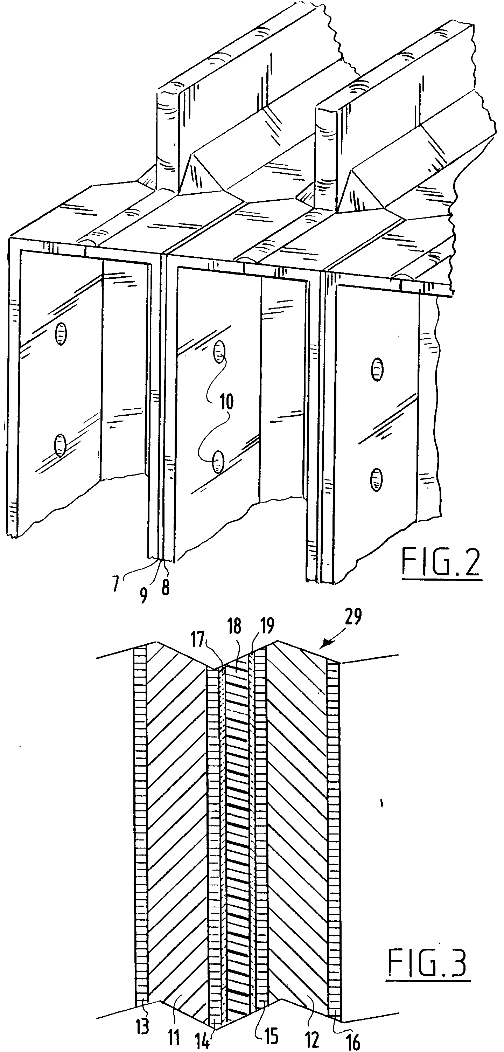

Figures 1 and 2 show a set 1 for a recuperative heat exchanger. This set consists of a number of structures 2 of metal plates which are fixedly welded together along the edges 3 and 4. The structures 2 are subsequently enamelled externally with an acid resistant enamel (enamel 36502600 from Ferro Techniek). Enamelling is performed by electrostatic spraying followed by fusing of the applied enamel layer.

Arranged on the short sides 5, 6 between enamel coatings 7, 8 of adjoining structures 2 is a foil 9 of PFA. The enamel coatings 7, 8 are then fused together with and durably joined to the PFA foil under pressure at a temperature of about 360°C.

For further improvement of the adhesion, holes 10 are arranged in the enamel coatings 7, 8 through which melted PFA can penetrate in order to improve adhesion.

Figure 3 shows a join 29 between steel plates 11 and 12 which are each provided on two sides with an enamel coating, 13, 14; 15, 16. The enamel coatings 14 and 15 are each provided with an adhesive layer 19, 17, a matt enamel such as 36505200 from Ferro Techniek. The adhesive layers 17 and 19 may optionally be omitted and replaced by a surface treatment roughening the enamel by sand blasting, wherein less than 10 μm of the enamel coating is removed. The enamel layer 13-16 is first applied to the steel plates 11, 12 and dried, where-after the adhesive layer is applied and the whole is fused. Finally, a fluorine-containing elastomer 18 (Viton from Dupont) is applied and joined under pressure to the adhesive layers 17, 19. The fluorine-containing elastomer can optionally be joined by vulcanization resulting from temporary arrangement in an autoclave at 1.5 bar and 175°C.

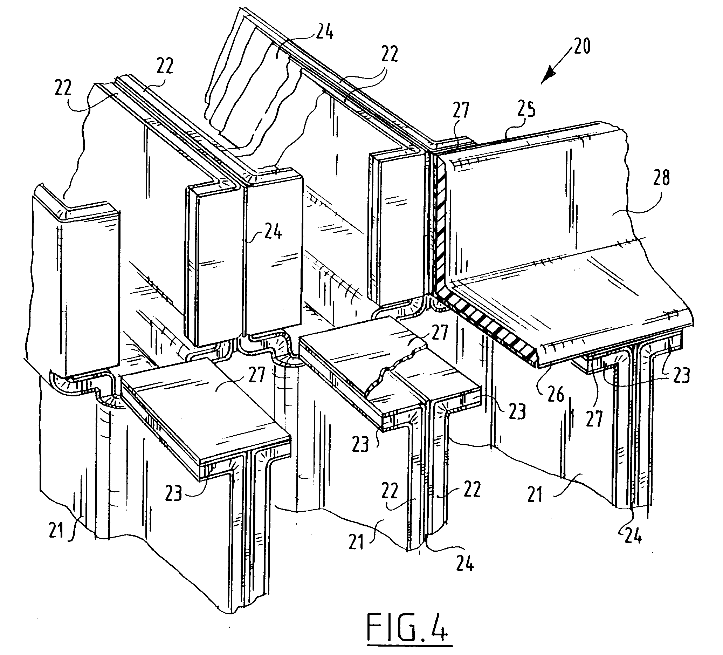

Figure 4 shows a detail of a recuperative heat exchanger 20. This recuperative heat exchanger 20 is constructed from profiled plates 21 provided with bent flanges 22 having bent edges 23.

The plates 21 are provided on two sides with an acid resistant enamel. The plates 21 are mounted onto each other under pressure with interposing of a PFA foil 24 (foil thickness 0.5 mm). A connecting angle piece 28 from Hastelloy treated on the sides 25 and 26 with a matt enamel is subsequently mounted under pressure onto the edges 23 with interposing of a PFA foil 27. The structure is then brought to a temperature of 360°C, whereby the PFA foil melts and forms a join between the enamel coatings of the flanges 22 and edges 23 on one side and the sides 25 and 26 on the other side.

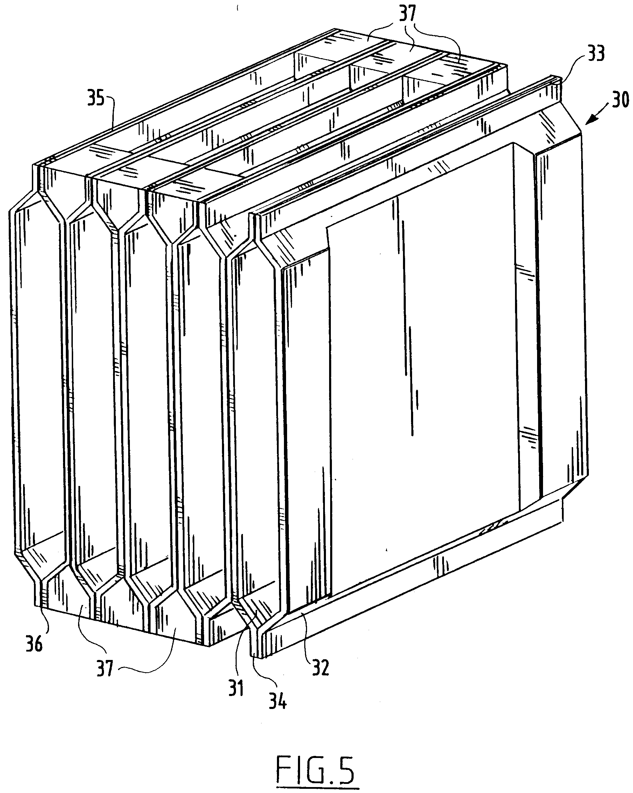

Figure 5 shows a part of a recuperative heat exchanger 30 which is constructed from pre-formed metal plates 31 and 32 which are provided on two sides with an acid resistant enamel coating of for instance enamel 365202600 from Ferro Techniek. After fusing of the enamel coating the edges 33 and 34, along which the metal plates are mutually joined while enclosing the thermoplastic plastic layer according to the invention, are slightly roughened by blasting with a fine blasting agent (for instance S70-120 Lering, Hengelo). A primer is applied to the blasted surfaces. This primer consists of a PTFE dispersion in water provided with an organic wetting agent. The primer is applied in a layer of about 15 μm thickness and is physically dried.

The metal plates 31 and 32 are subsequently assembled with enclosure of a PFA foil 35, 36 (thickness for instance 300 μm). Using a suitable clamping device the PFA foils are held clamped in between the edges 33 and 34. The assembled whole is then sintered at for example 350°C.

The corners are further filled with solid blocks 37 of a high temperature resistant plastic, for instance PFA or PTFE.

A heat exchanger 30 as according to figure 5 can also be assembled by providing the edges 33, 34 with a thin layer of adhesive enamel such as enamel 365205200 from Ferro Techniek. Fusing is then carried out once at about 850°C.

The metal plates 31, 32 are subsequently joined together while clamping in a high temperature resistant plastic, such as KR417 (Ultrapek[R]) BASF. Clamped in a suitable clamping device the whole is sintered at a temperature of circa 430°C. In this case the blocks 37 likewise consist of Ultrapek[R] and are fused with the adjoining portions of the metal plates 31, 32.

According to the invention it is likewise possible to provide enamelled plates in advance with a thermoplastic foil or powder layer arranged thereon which is attached thereto by heating to above the softening point, whereafter these pretreated plates are mutually joined according to the invention with interposing of the thermoplastic plastic layer.

## Claims

1. Method for joining metal articles, each of which is provided on at least one side with an enamel coating, comprising the steps of:
   i) applying a thermoplastic plastic layer to at least one of the enamel coatings;
   ii) making contact between the enamel coatings while enclosing the thermoplastic plastic layer; and
   iii) joining the thermoplastic plastic layer to the enamel coatings.

2. Method as claimed in claim 1, wherein the thermoplastic plastic layer is substantially only applied to the enamel coating portions for joining.

3. Method as claimed in claim 1 or 2, wherein an adhesive layer is arranged between an enamel coating and the thermoplastic plastic layer.

4. Method as claimed in claim 3, wherein the adhesive layer contains a matt enamel.

5. Method as claimed in claims 1-4, wherein the surface of the enamel coating portions for joining is roughened.

6. Method as claimed in claims 3-5, wherein a primer is applied to the adhesive layer or to the roughened enamel surface.

7. Method as claimed in claims 1-6, wherein a number of thermoplastic plastic layers are applied to the enamel coating.

8. Method as claimed in claims 1-7, wherein a thermoplastic plastic layer is applied in the form of a foil.

9. Method as claimed in claim 8, wherein the foil thickness amounts to 50-500 μm, preferably 75-450 μm and more preferably 100-400 μm.

10. Method as claimed in claims 1-7, wherein the thermoplastic plastic layer is applied by means of powder spraying.

11. Method as claimed in claims 1-10, wherein the thermoplastic plastic layer is fused onto the enamel coating.

12. Method as claimed in claims 1-11, wherein the thermoplastic plastic layer is heat-resistant at a temperature in the range of 100-300°C, preferably 120-280°C.

13. Method as claimed in claims 1-12, wherein the

thermoplastic plastic comprises polyfluoro-etnenepropene (FEP), polyperfluoroalkoxyvi-nylfluoride (PFA), polyethylenetetrafluoroethene (ETFE), polyvinylidenefluoride (PVDF), polychlo-rotrifluoroethene (PCTFE), polyethylenechlorot-rifluoroethene (ECTFE), polyaryletherketone (PAEK), polyetheretherketone (PEEK), polyethersulphone (PES) and polysulphone (PSU).

14. Structure consisting of at least two metal articles provided on at least one side with an enamel coating, which articles are mutually connected via the enamel coatings by interposing a thermoplastic plastic according to the method as claimed in the claims 1-13.

15. Structure as claimed in claim 14 that is a recuperative or regenerative heat exchanger.

FIG.1

FIG.2

FIG.3

FIG.4

FIG.5

EP 0 466 241 A1

**European Patent Office**

**EUROPEAN SEARCH REPORT**

Application Number

EP 91 20 1659

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | FR-A-2333646 (THE CONTINENTAL GROUP INC) * page 10, lines 29 - 36; claims 1-3; figures 3, 4 * | 1, 2, 8, 11, 12, 14 | C09J5/10 B32B15/08 |
| A | WO-A-8901407 (OLIN CORPORATION) * claims 1, 4, 7, 8 * | 9, 12, 13 | |
| A | DE-A-2731100 (VEREINIGTE GLASWERKE) * page 5, lines 25 - 26; claims 1-3 * | 1, 2 | |
| A | US-A-4882003 (B.J.BUGG) * claim 1 * | 3 | |
| | | | TECHNICAL FIELDS SEARCHED (Int. Cl.5) |
| | | | C09J B32B |

The present search report has been drawn up for all claims

| Place of search | Date of completion of the search | Examiner |
|---|---|---|
| THE HAGUE | 27 AUGUST 1991 | BUSCAGLIONE Y. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)

11